# EUROPÄISCHE PATENTANMELDUNG

(11) **EP 1 520 482 A1**
(43) Veröffentlichungstag der Anmeldung: **06.04.2005**
(21) Anmeldenummer: 04022929.6
(22) Anmeldetag: 27.09.2004
(51) Int. Cl.: A23G 3/00

(54) **Zuckerwatte**

(30) Priorität: 04.10.2003 DE 20315292 U
(71) Anmelder: S & F Popcorn Company Produktions GmbH & Co. KG, 23942 Dassow (DE)
(72) Erfinder: Lemke,Stefan, 23942 Dassow (DE)
(74) Vertreter: Thomas, Götz

(57) **Zusammenfassung**

Die Erfindung betrifft Zuckerwatte, die Zucker und mindestens einen Geschmacksstoff enthält. Um die Süße des Zuckers zu mildern und das Geschmackserlebnis beim Verzehr wesentlich zu verändern, wird erfindungsgemäß vorgeschlagen, dass der Geschmacksstoff eine Fruchtsäure oder ein Salz einer Fruchtsäure ist und in die Matrix der Zuckerwatte integriert ist.

## Beschreibung

Die Erfindung betrifft Zuckerwatte.

Zuckerwatte wird vor allem auf Jahrmärkten hergestellt, indem Kristallzucker (Saccharose) in einem rotierenden Spinnkopf einer Zuckerwattemaschine bis zum Schmelzen erhitzt und dabei Zentrifugalkräften unterworfen wird. Die Zentrifugalkräfte bewirken, dass der geschmolzene Zucker durch feine Radialdüsen aus dem Spinnkopf ausgeworfen wird. Beim Austritt aus den Düsen kühlt sich der Zucker schnell ab und erstarrt in Form von dünnen Fäden. Diese Fäden sammeln sich infolge der Drehbewegung des Spinnkopfs entlang der Innenwand einer den Spinnkopf umgebenden Schüssel, wo sie zur Portionierung und zum Verzehr locker auf Holzstäbchen oder dergleichen aufgewickelt werden.

Seit einiger Zeit wird Zuckerwatte jedoch auch im Einzelhandel in luftdicht verschlossenen Behältern angeboten, die einen Zutritt von Feuchtigkeit zu der hygroskopischen Zuckerwatte verhindern und dadurch eine mehrmonatige Haltbarkeit derselben gewährleisten.

Da Zuckerwatte in der Regel fast ausschließlich aus Zucker besteht, wird sie von vielen Menschen als zu süß empfunden, weshalb ein Bedürfnis besteht, die Süße beim Verzehr von Zuckerwatte abzumildern bzw. deren Geschmack so zu variieren, dass ein andersartiges Geschmackserlebnis erzielbar ist.

Um den Geschmack von Zuckerwatte zu verändern, ist es bereits bekannt, der Zuckerwatte Aromastoffe zuzusetzen, zum Beispiel aus der DE 299 16 485 U1, wo eine Zuckerwatte gemäß dem Oberbegriff des Schutzanspruchs 1 beschrieben ist, die aus Zucker, Aromastoffen und naturidentischen Farbstoffen besteht. Als Aromastoffe sind Orange E 9012601P, Kirsche E 7021103P, Blaubeere E 7091601 oder Banane E 7021102P genannt. Diese sind jedoch weder geeignet, die Süße der Zuckerwatte abzumildern noch führen sie beim Verzehr zu einer wesentlichen Veränderung des Geschmackserlebnisses.

Aus der DE 201 18 861 U1 ist weiter bereits eine über mehrere Monate haltbare Zuckerwatte bekannt, bei welcher der Zucker durch Zuckeraustauschstoffe ersetzt ist. Dieser Zuckerwatte ist darüber hinaus zur Gesundheitsförderung in geringen Mengen Ascorbinsäure (Vitamin C) beigemischt, was der Zuckerwatte zwar gesundheitsfördernde Eigenschaften verleihen mag, jedoch nicht unbedingt zur Verbesserung des Geschmackserlebnisses führt.

Darüber hinaus ist es bekannt, Süßigkeiten, wie Weingummi, mit kristalliner Fruchtsäure, zum Beispiel Zitronensäure, zu bestreuen, was zu einem besonders saueren Geschmackserlebnis führt, wenn die Süßigkeiten in den Mund geschoben werden.

Ausgehend hiervon liegt der Erfindung die Aufgabe zugrunde, bei einer Zuckerwatte der eingangs genannten Art die Süße abzumildern und das Geschmackserlebnis beim Verzehr wesentlich zu verändern.

Diese Aufgabe wird erfindungsgemäß dadurch gelöst, dass die Zuckerwatte eine in die Matrix der Zuckerwatte integrierte Fruchtsäure oder ein in die Matrix der Zuckerwatte integriertes Fruchtsäuresalz enthält.

Die erfindungsgemäße Zuckerwatte mit den Merkmalen des Schutzanspruchs 1 wird von den meisten Verbrauchern beim Verzehr nicht nur als viel weniger süß sondern auch als andersartig und zumeist als angenehm säuerlich empfunden. anders als bei der oberflächlichen Beschichtung von Weingummi bleibt dieser angenehm säuerliche Geschmack aufgrund der Integration der Fruchtsäure in die Matrix der Zuckerwatte während des gesamten Verzehrdauer der Zuckerwatte erhalten. Die Integration, d.h. eine im Wesentliche homogene Verteilung der Fruchtsäure bzw. des Fruchtsäuresalzes in der Matrix der Zuckerwatte, wird dadurch erreicht, dass die Fruchtsäure bzw. das Fruchtsäuresalz dem Zucker vor dessen Verarbeitung in kristalliner Form zugemischt wird und infolge eines ähnlichen oder etwas niedrigeren Schmelzpunkts zusammen mit dem Zucker aufgeschmolzen wird, und dass die Schmelzen beim Hindurchtritt durch die Düsen innig miteinander vermischt werden und nach dem Austritt aus den Düsen gemeinsam auskristallisieren, wobei die gebildeten Fruchtsäurekristalle in eine Grundmatrix aus kleinen Zuckerkristallen eingebettet und im Wesentlichen homogen in dieser verteilt werden.

Eine bevorzugte Ausgestaltung der Erfindung sieht vor, dass die Fruchtsäure ganz oder teilweise aus Äpfelsäure d,l besteht. Bei einem geeigneten Mischungsverhältnis mit dem Zucker verleiht diese der Zuckerwatte beim Verzehr einen milden abgerundeten säuerlichen Geschmack. Im Vergleich mit anderen Fruchtsäuren, insbesondere mit Zitronensäure, bleibt dieser Geschmack zudem über einen längeren Zeitraum im Mund erhalten und unterliegt während dieses Zeitraum geringeren Intensitätsschwankungen. Außerdem ist die Äpfelsure d,l im Vergleich mit anderen Fruchtsäuren, insbesondere Zitronensäure oder Weinsäure, weniger hygroskopisch, was insbesondere bei haltbarer Zuckerwatte einen bedeutenden Vorteil darstellt. Aus diesem Grunde werden allgemein wasserfreie Fruchtsäuren bevorzugt.

Neben der Äpfelsäure d,l ist auch Weinsäure (CHOH·COOH)·H₂O), auch Weinsteinsäure genannt, bzw. eine Mischung aus Weinsäure und Kaliumhydrogentartrat, einem Kaliumsalz der Weinsäure, gut als Bestandteil von Zuckerwatte geeignet, um dieser einen Geschmack mit einer etwas anderen Geschmacksrichtung als derjenigen von Äpfelsäure d,l zu verleihen.

Weniger gut geeignet ist hingegen Zitronensäure, da diese der Zuckerwatte einen etwas bitteren Nachgeschmack verleiht.

Weitere potentiell für Zuckerwatte geeignete Fruchtsäuren sind natürliche l-Äpfelsäure (HO·C₂H₃·(COOH)₂) mit einem Schmelzpunkt von jeweils 99 bis 100°C, sowie Zuckerrohrsäure (Glykolsäure HO·CH₂·COOH) mit einem Schmelzpunkt von 79°C. Allerdings besteht bei diesen beiden Fruchtsäuren die Gefahr, dass sie sich bei den Schmelztemperaturen des Zuckers zersetzen und ähnlich wie Zitronensäure einen bitteren oder in anderer Weise unangenehmen Beigeschmack zur Folge haben.

Der Zusatz d,l im Vorangehenden bezeichnet ein Racemat aus der linksdrehenden und der rechtsdrehenden Form der Säure, das gewöhnlich bei einer technischen Herstellung der Säure anfällt und normalerweise einen höheren Schmelzpunkt als die in der Natur vorkommende linksdrehende Form der Säure besitzt.

Der Gewichtsanteil der Fruchtsäure in der zu verarbeitenden Zucker/Fruchtsäure-Mischung liegt zweckmäßig zwischen 0,2 und 2 %, um einerseits eine spürbare Geschmacksveränderung gegenüber reiner Zuckerwatte hervorzurufen und andererseits einen für viele Menschen zu stark säuerlichen Geschmack zu vermeiden. Vorzugsweise liegt der Gewichtsanteil der Fruchtsäure zwischen 0,5 und 1,2 % und beträgt am besten etwa 0,8 %.

Neben der Fruchtsäure oder dem Fruchtsäuresalz kann die Zuckerwatte noch Aromastoffe und Farbstoffe enthalten, wobei ein zur Säure passendes Aroma und eine grüne Farbe bevorzugt wird, da diese vom Verbraucher gedanklich mit einer sauren Geschmacksrichtung verknüpft wird.

Im folgenden wird die Erfindung anhand von drei Ausführungsbeispielen näher erläutert.

### Beispiel 1

Zur Herstellung von Zuckerwatte wurden 1 kg handelsüblichem Kristallzucker (Saccharose, C₁₂H₂₂O₁₁) 8 g Äpfelsäure d,l (2-Hydroxybernsteinsäure, HOOC·CHOH·CH₂·COOH) (E 296) in kristalliner Form, zur Verstärkung des Aromas 2g Apple Flavour SD sowie 150 mg des synthetischen grünen Farbstoffs PEA Green F40-EP029 (E 102 und E 133) zugesetzt und gründlich vermischt, bevor diese Mischung portionsweise in den Spinnkopf einer handelsüblichen Zuckerwattemaschine (zum Beispiel Econo-Floss SS der Fa. Gold Medal Products, Cincinnati, Ohio, USA) eingefüllt und bei einer Temperatur von etwa 160 bis 180°C zu Zuckerwatte versponnen wurde.

Bei diesen Temperaturen wird neben dem Kristallzucker mit einem Schmelzpunkt von etwa 160°C auch die Äpfelsäure d,l mit einem Schmelzpunkt von 128 bis 129°C vollständig aufgeschmolzen. Beim Hindurchtritt durch die Düsen des Spinnkopfes erfolgt eine innige Vermischung der beiden Schmelzen, die dann beim Austritt aus den Düsen im Wesentlichen zeitgleich erstarren und wieder auskristallisieren. Dabei wird die Fruchtsäure in kleinen Kristallen in die Kristallmatrix des Zuckers eingebettet, die infolge der auf die erstarrende Schmelze ausgeübten Scherkräfte ebenfalls aus sehr kleinen fadenförmig aneinander gereihten Kristallen besteht.

Die derart erzeugte, in der Schüssel der Zuckerwattemaschine aufgefangene fadenförmige Zuckerwatte wurde mit einem Holzstäbchen zu einem Zuckerwattebausch aufgewickelt und dieser anschließend verkostet. Der Geschmack war angenehm säuerlich und blieb während der gesamten Verweilzeit der Zuckerwatte und noch etwas drüber hinaus im Mund erhalten. Im Vergleich mit Zuckerwatte ohne Fruchtsäure wurde die Süße infolge der Fruchtsäure als erheblich weniger intensiv empfunden.

Untersuchungen über die Haltbarkeit der Zuckerwatte in luftdicht verpackter Form ergaben, dass diese durch die zugegebene Äpfelsäure d,l nicht beeinträchtigt wurde.

### Beispiel 2

An Stelle der Äpfelsäure wurde dem Kristallzucker im gleichen Mischungsverhältnis wie in Beispiel 1 ein Gemisch aus Traubensäure d,l (traubensaure Weinsäure, (CHOH)₂·(COOH)₂·H₂O) in kristalliner Form und weinsaurem Kalium (Kaliumhydrogentartrat, KOOC·(CHOH)₂·COOH) in kristalliner Form zugegeben. Die Traubensäure war dabei nicht rein, sondern enthielt beträchtliche Anteile an Äpfelsäure.

Das Ergebnis war ähnlich wie dasjenige in Beispiel 1, jedoch mit einer etwas anderen Geschmacksrichtung.

### Beispiel 3

An Stelle der Äpfelsäure wurde dem Kristallzucker im gleichen Mischungsverhältnis wie in Beispiel 1 kristalline Zitronensäure beigemischt und die Mischung in der Zuckerwattemaschine zu Zuckerwatte versponnen.

Das Ergebnis war nicht ganz befriedigend, weil die Zuckerwatte einen bitteren Nachgeschmack besaß.

## Patentansprüche

1. Zuckerwatte, enthaltend Zucker und mindestens einen Geschmacksstoff, **dadurch gekennzeichnet, dass** der Geschmacksstoff eine Fruchtsäure oder ein Salz einer Fruchtsäure ist und in die Matrix der Zuckerwatte integriert ist.

2. Zuckerwatte nach Anspruch 1, **dadurch gekennzeichnet, dass** die Fruchtsäure Äpfelsäure ist.

3. Zuckerwatte nach Anspruch 1 oder 2, **dadurch gekennzeichnet**, das die Fruchtsäure Äpfelsäure d,l ist.

4. Zuckerwatte nach Anspruch 1, **dadurch gekennzeichnet, dass** die Fruchtsäure Weinsäure ist.

5. Zuckerwatte nach Anspruch 4, **dadurch gekennzeichnet, dass** die Fruchtsäure traubensaure Weinsäure d,l ist.

6. Zuckerwatte nach Anspruch 1, **dadurch gekennzeichnet, dass** das Fruchtsäuresalz ein Alkalisalz und vorzugsweise ein Kaliumsalz der Fruchtsäure ist.

7. Zuckerwatte nach Anspruch 6, **dadurch gekennzeichnet, dass** das Fruchtsäuresalz Kaliumhydrogentartrat ist.

8. Zuckerwatte nach Anspruch 1, **dadurch gekennzeichnet, dass** die Fruchtsäure eine Mischung von Äpfelsäure und traubensaurer Weinsäure ist.

9. Zuckerwatte nach einem der vorangehenden Ansprüche, **dadurch gekennzeichnet, dass** der Anteil der Fruchtsäure oder des Fruchtsäuresalzes zwischen 0,2 und 2 Gew.-% beträgt, bezogen auf das Gesamtgewicht der Zuckerwatte.

10. Zuckerwatte nach einem der vorangehenden Ansprüche, **dadurch gekennzeichnet, dass** der Anteil der Fruchtsäure oder des Fruchtsäuresalzes zwischen 0,5 und 1,2 Gew.-% beträgt, bezogen auf das Gesamtgewicht der Zuckerwatte.

11. Zuckerwatte nach einem der vorangehenden Ansprüche, **dadurch gekennzeichnet, dass** der Anteil der Fruchtsäure oder des Fruchtsäuresalzes etwa 0,8 Gew.-% beträgt, bezogen auf das Gesamtgewicht der Zuckerwatte.

12. Zuckerwatte nach einem der vorangehenden Ansprüche, **dadurch gekennzeichnet, dass** die Fruchtsäure bzw. das Fruchtsäuresalz gleichförmig in der Zuckerwatte verteilt ist.

13. Zuckerwatte nach einem der vorangehenden Ansprüche, **dadurch gekennzeichnet, dass** die Zuckerwatte einen Farbstoff enthält.

14. Zuckerwatte nach einem der vorangehenden Ansprüche, **dadurch gekennzeichnet, dass** der Farbstoff grün ist.

15. Zuckerwatte nach einem der vorangehenden Ansprüche, **dadurch gekennzeichnet, dass** die Zuckerwatte mindestens einen zusätzlichen Aromastoff enthält.

16. Zuckerwatte nach einem der vorangehenden Ansprüche, **dadurch gekennzeichnet, dass** die Zuckerwatte in einem Behälter luftdicht verpackt ist.
